# EUROPEAN PATENT SPECIFICATION

(11) **EP 2 871 142 B1**
(45) Date of publication and mention of the grant of the patent: **06.06.2018**
(21) Application number: 13778607.5
(22) Date of filing: 16.04.2013
(51) Int. Cl.: B29C 70/44, B29C 70/78, B65D 90/02

(54) **METHOD FOR TRANSFORMING AN EXISTING SINGLE-WALLED TANK INTO AN INTRINSICALLY SAFE DOUBLE-WALLED TANK**
VERFAHREN ZUR UMWANDLUNG EINES BESTEHENDEN EINWANDIGEN BEHÄLTERS IN EINEN EIGENSICHEREN DOPPELWANDIGEN BEHÄLTER
PROCÉDÉ PERMETTANT DE TRANSFORMER UN RÉSERVOIR EXISTANT À SIMPLE PAROI EN UN RÉSERVOIR À DOUBLE PAROI INTRINSÈQUEMENT SÛR

(30) Priority: 16.04.2012 ES 201230569
(43) Date of publication of application: 13.05.2015
(73) Proprietor: Peña Gómez, José Luis, 28701 San Sebastián de Los Reyes (ES)
(72) Inventor: Peña Gómez, José Luis, 28701 San Sebastián de Los Reyes (ES)
(74) Representative: Díaz de Bustamante y Terminel, Isidro
(86) International application number: PCT/ES2013/070241
(87) International publication number: WO 2013/156649

(56) References cited:
- WO-A1-2011/110715
- WO-A1-2011/110715
- WO-A2-02/090101
- ES-T3- 2 195 635
- ES-T3- 2 355 875
- GB-A- 2 474 038
- GB-A- 2 474 038
- US-A- 4 817 817
- US-A- 5 261 764
- US-A- 5 752 616
- US-A- 5 752 616
- US-B1- 6 746 715

## Description

### OBJECT OF THE INVENTION

The invention, as exposed on the wording of the present specification, relates to a method for transforming an existing single-walled tank, into an intrinsically safe double-walled tank.

More particularly, the object of the invention focuses on a method applicable to tanks intended for containing potentially subsoil polluting liquids, particularly petroleum products or petroleum by-products, whose evident purpose is transforming a single-walled tank into a double-walled one, through the creation of an inner wall, with the particularity of being based on the application of vacuum both for creating the interstitial chamber between both walls and for creating the new wall and with the advantage of not doing so using moulds, but said new wall is formed directly on the interstitial chamber.

### APPLICATION FIELD OF THE INVENTION

The application field of the present invention is framed within the sector of the industry intended to the manufacture and/or transformation of liquid storage tanks in general, focusing preferably on the ones intended for LPPs (liquid petroleum products), and in particular, to the subsoil polluting liquids.

### BACKGROUND OF THE INVENTION

As it is known, liquid storage tanks and reservoirs, for various reasons, are deteriorated over time and loose the tightness needed to perform their work.

Their repair so that they can continue being operative has given rise to, *inter alia,* a sector of companies called "tank repairers" which are those focusing their activity on these tasks.

Additionally, it is necessary not only their repair but the construction of a new reservoir therein so that the combination of both constitutes what is generally called double-walled reservoir due to the fact that the interstitial chamber is the one which will monitor the correct behaviour of both walls.

As a reference to the state of the art, it should be noted that the applicant himself is the owner of various documents related to the subject, among which it is worth mentioning:
- Patent ES2276591, relating to a "System for transforming a single-walled tank into a double-walled one, with leak detection", which consists of an "architecture" for the transformation of the tanks from single- to double-walled. Specifically, it contemplates the provision of an inner wall, with an interstitial chamber, which houses an intermediate layer of elastic nature, obtained from the exploitation of waste elastomeric materials, fragmented and compacted together by a suitable adhesive material.
- Patent WO2008/110645 relates to improvements on the foregoing, and which specifically provide for the provision of intermediate layers between both walls, one of which includes multiple protruding formations which are supported on the layer adjacent to the outer wall, and furthermore an anticorrosion coating consisting of resin of high resistance to chemicals and good electrical conductive.
- Non published Patent application P 200902126, relates to an "Improved method for transforming single-walled tanks into double-walled tanks", which consists of: degassing and cleaning of the inner face of the original outer wall; checking the tightness of the outer wall and, if necessary, incorporating a GFRP coating; placing a plastic mesh (MDPE), which defines the interstitial chamber, constructing an inner tank supported on the inner face of the mesh, which constitutes the inner wall of the new tank, made of aluminium sheets joined with flaps and fixing by adhesives; stiffening and regrowth of said inner wall with the application of GFRP layers; applying a final coating layer "Top Coat" or high chemical resistance resin, or a "pre-preg" or preimpregnated composite material.
- Non published Patent application P 201000316, relating to improve the object of the foregoing patent P200902126, consisting in the incorporation of the GFRP coating which stiffen and regrowth the inner wall of the new tank are applied through vacuum pumps, in a first option, according to an infusion process consisting in introducing into a mould, previously coated with the fibre, the fabric to be incorporated as a reinforcement, wherein said fabrics must be impregnated with resin in liquid phase; and in a second option, according to a preimpregnation process, where the fibre fabrics are impregnated in a manufacture line with the resin and the catalyst, and are applied on a mould, causing their polymerization through application of heat.
- Patent WO2011/110715 relates to a "Method for repairing and waterproofing a steel tank which has lost its tightness" which is based on vacuum pumps and comprises coating the tank with prepreg comprised of fabric and resins with catalyst, distributing the materials in one or many layers, placing a vacuum bag and closing the tank, curing/polymerization of the prepreg, heating the whole inner surface up to the required temperature.
- Patent WO/2011/110715 is based on the two foregoing applications and discloses the features of the preamble of claim 1.
- And patent application P 201131746, relating to a "Method for increasing the safety and detecting leaks in liquid storage tanks" consisting in: placing, on the inner surface of the outer layer of the tank, an intermediate layer of PVC foam, thereon a conductive mesh, and on this one, an inner layer of GFRP, joining all the layers with a polymer through a resin infusion process by applying vacuum. The obtained tank is single-walled.

Thus, the objective of the present invention is developing a new type of method for the transformation of the existing single-walled tanks in double-walled tanks through the application of a vacuum system, just consisting in a new vacuum system which improves the foregoing methods, especially in the construction phase of the interstitial chamber and of the new wall, since it does not use moulds but the new wall is formed directly on the interstitial chamber.

### EXPLANATION OF THE INVENTION

So far the transformations of the existing tanks, even the construction of new tanks, has been made wet (so is called the manual application of GFRP, glass fibre reinforce plastic) that is, through the application on a mould in cases of new tanks or on the interior wall of an existing tank, the wall is wetted with catalysed resin, the fibre material is adhered and is wetted again with the catalysed resin. This operation is repeated successively until achieving the desired thickness. The application of the resin is carried out occasionally with a brush and more frequently with a roller.

In the case of the new tanks the moulds are constituted by two identical half-tanks, within which the new walls are laminated and, once demolded, are joined together shaping the new tank.

When it comes to transforming an existing tank into a double-walled tank, there are two different techniques:

The first one consists in constructing a new wall with some material sufficiently flexible which is inserted through the manhole, aluminium, thin sheets of GFRP, or anyone else which, then, regrows with successive wet applications of GFRP.

The second one consist in using a fabric called "parabeam" having the feature that in contact with the resins it creates a cavity separating the front and rear layers of the laminate.

However, there is no technique that has applied so far the vacuum systems to the transformation of tanks not even to the new construction ones, making them in one piece as it is already mentioned above.

It is true that for the construction of new tanks there are continuous thread winding machines which execute those as if they were large diameter pipes, by applying fabrics on a cylindrical mould in order to, once demolded, close the pipe with two prefabricated bottoms, but this technique is not either a vacuum system.

Therefore, we can say without reservation that the application of the vacuum systems to the transformation of the tanks is a novelty.

As noted above, when the infusions are carried out on a mould, this one always has a geometry whereby the fabrics, generally, are placed so that gravity helps in favour of their placement. When a portion of the piece has to be in the opposite direction, the mould is split in two halves and the piece is joined subsequently whether it is or not symmetrical.

On the other hand, when we want transform a single-walled tank into a double-walled tank, the new wall, necessarily, must be separated by which is called the "interstitial chamber" of the existing wall. This means that there are two drawbacks:
- That 50 % of the infusion whereby the new wall is constructed must be executed with the effects of gravity working against it, and
- That we cannot adhere, to the existing wall, the fabrics of the new one because, then we would not achieve the goal of having the interstitial chamber, which is critical because it is the control element of the future tightness of both walls.

These two aspects, critical in the transformation system proposed by the present invention, are solved by the application of a bag which, by being flexible and by carrying out the vacuum in the interstitial chamber that we create between the existing tank and said bag, adopts the same shape as the tank. Afterwards we apply on the interior wall which replicates the exterior one, the fabrics that shall become part of the new wall and finally we close it with a new bag so that it will allow us to carry out again the vacuum and so proceed to execute the infusion of the fibre, not being required, therefore, the use of moulds.

Made said infusion, the first bag will remain within it as if it were a "permanent formwork".

From the operational point of view, the recommended process provides for the construction of the leak detection interstitial chamber, through a plastic material bag which must be waterproof and chemically resistant to the resins which will be applied later.

To this end, a mesh is applied directly on the interior wall of the existing tank, whose mission is creating a spacing but which, at the same time, must be highly porous since it must allow the passage of a fluid, gas or liquid, offering the least possible resistance, but maintaining the desired spacing.

Then it is placed, on said mesh, a bag which adheres to the fabric of the mesh when the air is extracted by a vacuum higher to -0.4 bar. The result is a chamber which will have a thickness comprised between 1 and 1.5 mm.

The new wall is made through the application of the fibre fabrics which shall constitute it adhered with bond adhesive.

Depending on the type of tank and on the characteristics searched for, one or another type of fabrics will be placed, selecting axes and grammage.

The infusion strategy to be applied will be the one determined by the delivery pipes of the resin and of vacuum.

Finally, on said fabrics another plastic bag is placed, carrying out the vacuum in its exterior portion and the foregoing bags which constitutes the interstitial chamber.

When the vacuum is higher than -0.9 bar, it is possible proceed to carry out the fibres infusion. Before and during this construction process the -0.4 bar vacuum of the interstitial chamber must be maintained, which in no case must rise, and if it drops it must be checked that this loss does not come from the outer wall of the tank.

In the light of the aforementioned, it is stated that the described method for transforming an existing single-walled tank, into an intrinsically safe double-walled tank represents an innovative structure with characteristics unknown so far to this end, reasons which in combination with its practical utility, provide it with enough basis to obtain the exclusivity privilege which is applied for.

### DESCRIPTION OF THE DRAWINGS

In order to complement the description being fulfilled and with the aim of helping to a better understanding of the characteristics which differentiate it, the present specification is accompanied, as an integral part thereof, by a set of plans, in which by way of illustration and not of limitation, is represented the following:
Figure number 1.- shows a schematic representation of a sectional view of the tank obtained from the method object of the invention, being appreciated on it the arrangement and structure of the elements it comprises, being represented said elements in disproportional dimensions so as to facilitate their observation.

### PREFERENTIAL EMBODIMENT OF THE INVENTION

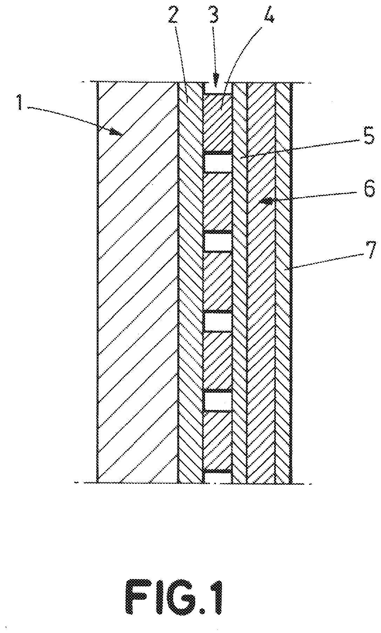

In light of the only described figure 1, and according to the numbering taken on it, it can be seen the elements being part of a double-walled tank obtained according to the method object of the invention as well as the arrangement thereof in an example of preferential embodiment thereof, comprising said method the following three successive stages:
1/ A first stage, already known, of preparing the tank, which comprises the following steps:
   1/ Waterproofing of the existing wall (1).
      - Opening of the manhole.
      - Degassing of the tank, by the extraction of the gases therein.
      - Extraction of the waste product.
      - Access to the inside of said tank for cleaning its interior.
      - Inspection of the state of its walls, bottoms and ferrules.
      - Application of a reinforcing coating (2), for example of GFRP (glass fibre reinforced polyester) to the wall of the tank in order to waterproof and reinforce it. This stage is the one which has been so far executed for repairing the defective tanks.
II/ A second stage consisting in the construction of the leak detection interstitial chamber (3), which comprises the following steps:
   - Placement, on the existing wall (1) and its coating (2), of a mesh (4) or network, which is permeable to the passage of a liquid or gas fluid and suitably resistant to the pressure of the new wall which will be constructed later, being for example of plastic material.
   - Making of two nozzles (not represented) for allowing the extraction of air from the interstitial chamber (3) and from between the two bags which are applied, such as will be explained below, and for being able to control its tightness.
   - Placement of a first bag (5) of flexible material, normally of plastic chemically resistant to the resins, and perfectly tight.
   - Carrying out of a vacuum in the space which is created between said first bag (5) and the existing wall (1) of the tank with its coating (2), thus the interstitial chamber (3) is formed with the thickness of the mesh (4) which has been previously placed on said existing wall (1) .
   This stage constitutes a novelty in all senses.
III/ and a third stage consisting in the construction of the new wall (6), which comprises the following steps:
   - Placement of the fibre fabrics which shall form the new wall (6).
   - Placement of materials for the distribution of resin, nuclear or helical pipes or both (not represented), according to the infusion strategy which is anticipated for application so as to impregnate the fabrics with said resin as a reinforcement thereof.
   - Placement of a second bag (7) of flexible material, normally plastic, resistant to the resins.
   - Carrying out of the vacuum in the space existing between the first bag (5), and the second bag (7) with the fibre fabrics and the resin distribution materials between both of them.
   - Execution of the resins infusion until the completion of the soaking of the entirety of the fabrics forming the new wall (6).

This third stage, constitutes also a novelty in relation to other known methods, since so far the application of the fibres forming the interior wall was made on moulds, not on the interstitial chamber.

Being sufficiently described the nature of the present invention, as well as the way to put it into practice, it is not considered necessary to make more extensive its explanation for any expert in the art understands its reach and the derived advantages, stating that, within its essentiality, it might be put in practice in other embodiments differing in detail from such indicated by way of example, to which the protection requested will also reach, provided that its main principle is not altered, changed or modified.

## Claims

1. METHOD FOR TRANSFORMING AN EXISTING SINGLE-WALLED TANK INTO AN INTRINSICALLY SAFE DOUBLE-WALLED TANK, which, being of the type comprising:
- The preparation of the tank, through:
- Waterproofing of the existing wall (1)
- Opening of the manhole
- Degassing of the tank, by the extraction of the gases therein
- Extraction of the waste product
- Access to the inside of said tank for cleaning its interior
- Inspection of the state of its walls, bottoms and ferrules
- Application of a reinforcing coating (2), for example of GFRP (glass fibre reinforced polyester) to the wall of the tank in order to waterproof and reinforce it
- And the construction of a new wall (6) with fibres or fibre fabrics through resins infusion, existing a leak detection interstitial chamber (3), is **characterized in that**, after the first stage of preparing the tank,
- it is contemplated a second stage of construction of the interstitial chamber (3), comprising the following steps:
- Placement, on the existing wall (1) and its coating (2), of a mesh (4) permeable to the passage of a liquid or gas fluid and resistant to pressure
- Making of two nozzles for allowing the extraction of air from the interstitial chamber (3) and for being able to control its tightness
- Placement of a first bag (5) of flexible material, chemically resistant to the resins and perfectly tight.
- Carrying out of a vacuum in the space which is created between said first bag (5) and the existing wall (1) of the tank with its coating (2), being the interstitial chamber (3) formed with the thickness of the mesh (4)
- And, subsequently, a third stage of construction of the new wall (6), comprising the following steps:
- Placement of the fibre fabrics which shall form the new wall (6)
- Placement of resin distribution materials or helical pipes or both, for the distribution through infusion of reinforcement resin to said fabrics
- Placement of a second bag (7) of flexible material, resistant to the resins
- Carrying out of the vacuum in the space existing between the first bag (5) and the second bag (7) with the fibre fabrics and the resin distribution materials between both of them
- Execution of the resins infusion until the completion of the soaking of the entirety of the fabrics forming the new wall (6).

2. METHOD FOR TRANSFORMING AN EXISTING SINGLE-WALLED TANK INTO AN INTRINSICALLY SAFE DOUBLE-WALLED TANK, according to claim 1, **characterized in that** the first and second bags (5, 7) are of plastic.

## Patentansprüche

1. VERFAHREN ZUR UMWANDLUNG EINES BESTEHENDEN EINWANDIGEN BEHÄLTERS IN EINEN EIGENSICHEREN DOPPELWANDIGEN BEHÄLTER mit folgenden Bestandteilen:
- Folgende Vorbereitung des Tanks:
- Abdichtung der vorhandenen Wand (1).
- Öffnung des Einsteiglochs.
- Entgasen des Tanks durch Entnahme der darin vorhandenen Gase.
- Entfernen von Abfallprodukten.
- Zugang ins Innere des Tanks zur Reinigung der Innenseite.
- Zustandsprüfung der Wände, Böden und Ringbeschläge.
- Auftragen einer Verstärkungsschicht (2), beispielsweise GFK (glasfaserverstärkter Kunststoff), auf die Tankwand, um diese wasserdicht zu machen und zu verstärken.
- Und die Errichtung einer neuen Wand (6) mit Faser oder Fasergeweben durch Harzinfusion, einer interstitiellen, Leckerkennungskammer (3), **dadurch gekennzeichnet, dass** nach der ersten Vorbereitungsphase des Tanks
- eine zweite Bauphase der interstitiellen Kammer (3) mit folgenden Schritten vorgesehen ist:
- Anbringen eines Netzes (4) an der vorhandenen Wand (1) und deren Beschichtung (2), das durchlässig für eine Flüssigkeit oder einen Gasfluss und druckbeständig ist.
- Herstellen zweier Stutzen, mit denen das Ablassen von Luft aus der interstitiellen Kammer (3) möglich ist und deren Dichtigkeit kontrolliert werden kann.
- Anbringen eines ersten Beutels (5) aus flexiblem Material, chemisch beständig gegen die Harze und absolut dicht.
- Herstellen eines Vakuums in dem Bereich, der zwischen dem genannten ersten Beutel (5) und der bestehenden Wand (1) des Tanks mit ihrer Beschichtung (2) besteht, wobei die interstitielle Kammer (3) durch die Dicke des Netzes (4) gebildet wird.
- Und daran anschließend eine dritte Bauphase der neuen Wand (6), die folgende Schritte enthält:
- Anbringen des Fasergewebes, das die neue Wand bilden wird (6) .
- Anbringen von Harzverteilungsmaterialien oder spiralförmigen Röhren oder beidem zur Verteilung durch Eingießen von verstärkendem Harz in die genanten Gewebe.
- Anbringen eines zweiten Beutels (7) aus flexiblem Material, das gegen die Harze beständig ist.
- Herstellen des Vakuums in dem Bereich zwischen dem ersten Beutel (5) und dem zweiten Beutel (7) mit den Fasergeweben und den Harzverteilungsmaterialien zwischen diesen beiden.
- Durchführung der Harzinfusion, bis das ganze, die neue Wand (6) bildende Gewebe vollkommen durchtränkt ist.

2. VERFAHREN ZUR UMWANDLUNG EINES BESTEHENDEN EINWANDIGEN BEHÄLTERS IN EINEN EIGENSICHEREN DOPPELWANDIGEN BEHÄLTER gemäß Anspruch 1, **gekennzeichnet dadurch, dass** der erste und der zweite Beutel (5, 7) aus Kunststoff sind.

## Revendications

1. PROCÉDÉ PERMETTANT DE TRASNFORMER UN RÉSERVOIR EXISTANT À SIMPLE PAROI EN UN RÉSERVOIR À DOUBLE PAROI INTRINSÈQUEMENT SÛR, du type comportant :
- La préparation du réservoir, en :
- Imperméabilisant la paroi existante (1).
- Ouvrant le regard.
- Dégazant le réservoir, par l'extraction des gaz s'y trouvant.
- Enlevant les déchets.
- Accédant à l'intérieur dudit réservoir pour le nettoyer.
- Examinant l'état de ses parois, fonds et férules.
- Appliquant un revêtement renforcé (2), par exemple en PRV (polyester renforcé en fibre de verre) à la paroi du réservoir afin de l'imperméabiliser et de la renforcer.
- Et la construction d'une nouvelle paroi (6) avec des fibres ou un tissu de fibre par des infusions de résine, avec une chambre interstitielle de détection de fuites (3), qui se **caractérise en ce que**, après la première phase de préparation du réservoir,
- une deuxième phase de construction de la chambre interstitielle (3) est envisagée, comprenant les étapes suivantes :
- Le placement, sur la paroi existante (1) et son revêtement (2), d'une maille (4) perméable au passage d'un liquide ou gaz fluide et résistante à la pression.
- La fabrication de deux embouts pour permettre l'extraction de l'air de la chambre interstitielle (3) et afin de pouvoir contrôler son étanchéité.
- Le placement d'un premier sac (5) de matériaux souples, résistant chimiquement aux résines et parfaitement étanche.
- L'aspiration de l'espace créé entre ledit sac (5) et la paroi existante (1) du réservoir avec son revêtement (2), la chambre interstitielle (3) étant formée par l'épaisseur de la maille (4).
- Et, ensuite, une troisième phase de construction de la nouvelle paroi (6), comprenant les étapes suivantes:
- Le placement du tissu de fibre qui formera la nouvelle paroi (6).
- Le placement des matériaux de distribution en résine ou de tuyauteries hélicoïdales ou les deux, pour la distribution par l'infusion de résine renforcée audit tissu.
- Le placement d'un deuxième sac (7) de matériaux souples, résistant à la résine.
- L'aspiration de l'espace existant entre le premier sac (5) et le deuxième sac (7) avec le tissu de fibre et les matériaux de distribution en résine entre les deux.
- La réalisation de l'infusion des résines jusqu'à l'achèvement de l'immersion de la totalité du tissu formant la nouvelle paroi (6).

2. PROCÉDÉ PERMETTANT DE TRASNFORMER UN RÉSERVOIR EXISTANT À SIMPLE PAROI EN UN RÉSERVOIR À DOUBLE PAROI INTRINSÈQUEMENT SÛR, conformément à la procédure 1, **caractérisée en ce que** le premier et deuxième sacs (5, 7) sont en plastique.
